Europäisches Patentamt

European Patent Office

Office européen des brevets

(19)

(11) Publication number: **0 263 884 B1**

# EUROPEAN PATENT SPECIFICATION

(12)

(45) Date of publication of patent specification: **07.01.93**

(51) Int. Cl.⁵: **D01F 9/22**, D01F 6/18, D01F 6/38, D06M 11/36, D01F 11/06

(21) Application number: **87902710.0**

(22) Date of filing: **09.04.87**

(86) International application number: **PCT/JP87/00219**

(87) International publication number: **WO 87/06276 (22.10.87 87/23)**

(54) **COMPOSITE MATERIAL REINFORCED WITH SULFURIZED ACRYLIC FIBERS.**

(30) Priority: **14.04.86 JP 84334/86**
**14.04.86 JP 84335/86**
**30.06.86 JP 151680/86**

(43) Date of publication of application:
**20.04.88 Bulletin 88/16**

(45) Publication of the grant of the patent:
**07.01.93 Bulletin 93/01**

(84) Designated Contracting States:
**DE FR GB IT**

(56) References cited:
| | |
|---|---|
| **FR-A- 2 413 108** | **GB-A- 1 282 500** |
| **JP-A- 5 175 119** | **JP-B- 4 724 967** |
| **JP-B- 4 724 967** | **JP-B- 4 729 932** |
| **JP-B- 5 319 692** | **JP-B- 5 419 491** |

**Otani Sugio et al., Tanso Sen-i, 1 July 1983, pp. 626-630**

(73) Proprietor: **TORAY INDUSTRIES, INC.**
**2-1, Nihonbashi Muromachi 2-chome Chuo-ku**
**Tokyo 103(JP)**

(72) Inventor: **MATSUNASE, Takeo Grand-maison-Moriyama 1-502**
**300-15, Fuke-cho**
**Moriyama-shi Shiga 524(JP)**
Inventor: **TAKADA, Takashi**
**15 B1-24, Sonoyama 2-chome**
**Otsu-shi Shiga 520(JP)**

(74) Representative: **Ellis, John Clifford Holgate et al**
**MEWBURN ELLIS & CO. 2/3 Cursitor Street**
**London EC4A 1BO(GB)**

**Description**

The present invention relates to, composite materials reinforced with acrylic sulfide fibers and particularly, though not exclusively, with fibers applicable to the preparation of heat resistant and flame resistant spun and woven products, abrasive materials and cement products cured in an autoclave.

Asbestos has been widely applied hitherto in such fields where heat resistance, anti-flammability and alkali resistance are required as protective means such as fire fighting clothes, working clothes for wear in front of furnaces and sheets for protection against welding sparks, sealing materials such as gaskets and ground packings, heat-shielding materials, filtering materials such as bag filters, abrasive materials such as in brakes and clutches, electrically insulating materials and cement products cured in an autoclave.

However, it has been clarified that asbestos particularly endangers human health, for example, it causes cancer of the lung, and the use of asbestos has therefore become legally restricted or prohibited in many countries.

A variety of fibers such as carbon fiber, steel fiber, glass fiber, aramide fiber, phenolic fiber and flame resistant fiber (oxidized fiber) have therefore been proposed as substitute materials for asbestos.

Among these substitute fibers, an acrylic oxidized fiber prepared by heating and oxidizing an acrylic fiber in air, as disclosed in the specifications of USP 3,508,874 and USP 3,961,888, is particularly noted because it has low density and excellent anti-flammability and it is flexible and relatively cheap. However, the acrylic oxidized fiber described above has an inhomogeneous structure where the degree of oxidation of the fiber skin layer is much larger than that of the core and therefore has low tensile strength and poor toughness. Spinning, weaving and knitting of the fiber are difficult and even if they can be done, abrasion resistance of the product thus obtained is poor. Heat resistance of the product is not good either and, for example, there is a problem that the strength decreases and the practical performance vanishes when it is used at a temperature higher than 150°C for a long period.

Therefore, sufficient performance cannot always be obtained for such applications as substituting for asbestos as heat resistant/flame resistant protective means, packings, filters and electrically insulating materials where heat resistance, flame resistance and abrasion resistance are required. A brake lining based on the above described acrylic oxidized fiber is proposed in the specification of USP 4,259,397, but its abrasion resistance and heat resistance at higher temperatures are poor and there are such problems in its practical performance that cracks occur in the abrasive material during use and its durability is not always sufficient.

Moreover, high strength acrylic fibers and polyvinyl alcohol fibers have been tried for use as reinforcing fibers for hydraulic materials such as cement, which is one of the main application fields of asbestos, but they do not withstand a strong alkali at higher temperatures in such a situation where curing in an autoclave is carried out in steam at 180°C and therefore they completely lose their reinforcing properties. Acrylic oxidized fibers prepared by heating and oxidizing the above described acrylic fibers in air also do not show improved alkali resistance at higher temperature and they cannot therefore be used for this application. Meanwhile, an acrylic sulfide fiber obtained by heating an acrylic fiber in sulfur dioxide is described in Japanese Patent Publication No. 36461/1972 (corresponding to GB-A-1,282,500) as an example of the methods for preparing special carbon fibers and it is described therein that this sulfide fiber has a breaking strength higher than that of the acrylic fiber before sulfuration.

However, the acrylic sulfide fibers are merely precursors for the carbon fibers, and there is not disclosed a possible application of the same as reinforcing fibers for composite materials.

Moreover , according to the results obtained by the present inventors, when an acrylic fiber prepared from an acrylonitrile polymer having an ordinary degree of polymerization and containing a copolymerizing component used for manufacturing a conventional acrylic fiber such as, for example, acrylic acid, methacrylic acid, itaconic acid, methyl methacrylate and acrylamide, prepared by the same procedure as the example 1 in the above described publication, is heated and sulfurized in sulfur dioxide, the denier of the sulfurized fiber obtained increases due to the introduction of sulfur bonds. As a result, increase in the tensile strength cannot be obtained and the tensile elongation remarkably decreases. Improvement of the toughness cannot be expected either. It is therefore clear that the problems related to spinning, weaving and knitting and abrasion resistance cannot be solved by this method in a similar manner to the oxidized fiber obtained by heating and oxidizing the above described acrylic fiber in air. Therefore, the sulfide fiber described in this known example, although useful as an intermediate substance in manufacturing carbon fibers, does not satisfy the characteristics of a substitute for asbestos.

Nevertheless it has been found that acrylic sulfide fibers are useful as reinforcement in composite materials.

The invention, therefore, provides composite materials reinforced with acrylic sulfide fibers.

Particularly good results are obtainable from acrylic sulfide fibers (herein referred to as "preferred acrylic sulfide fibers") whose tensile strength is at least 3.5 g/d (0.31 N/tex), whose toughness, expressed by $T \cdot E^{1/2}$, i.e. by the product of the tensile strength and the square root of tensile elongation (E%) is greater than 10 when T is in g/d(0.883 when T is in N/tex) and the sulfur content is more than 0.5 weight %.

The preferred acrylic sulfide fibers can be made by heating acrylic fibers whose tensile strength is at least higher than 7 g/d in an atmosphere containing sulfur. The present invention also relates to composite materials such as hydraulic substances cured in an autoclave and abrasive materials reinforced with acrylic sulfide fibers.

Preferred acrylic sulfide fibers contain cyclic structures containing sulfur bonds and cross-linking structures of sulfur. It is important for this purpose that acrylic fibers are heated and sulfurized in a sulfur-containing atmosphere under relatively mild reaction conditions, to prepare sulfide fibers where sulfur bonds are sufficiently introduced into the inside of the fibers and structural difference between outer and inner layers is small. The sulfide fibers thus obtained have high strength and excellent heat resistance, anti-flammability and alkali resistance and fibers to be suitable for a variety of applications can be prepared by changing the acrylic fibers to be used and the reaction conditions in the sulfur-containing atmosphere in various ways.

For example, for heat resistant and flame resistant spun and woven products to be used for protective means, packings and filters requiring heat resistance and anti-flammability, it is preferable that the sulfur content in the fibers is above 5 weight %, more preferably 8 to 25 weight %, the tensile strength is greater than 3.5 g/d (0.31 N/tex), more preferably 4 to 9 g/d and the toughness as previously defined is greater than 10 $E^{\frac{1}{2}}$g/d (0.883 $NE^{\frac{1}{2}}$/tex), more preferably 12 to 35 $E^{\frac{1}{2}}$g/d (1.06 to 3.09 $NE^{\frac{1}{2}}$/tex). In this case, if the sulfur content is lower than 5 weight %, not only anti-flammability but also such characteristics as heat resistance, chemical resistance etc. cannot be sufficiently obtained. In order to give much higher anti-flammability to the sulfide fibers of the present invention, it is desirable that the limiting oxygen index (LOI) of the sulfide fibers is higher than 40, preferably 45 to 70.

Moreover, if the tensile strength is lower than 3.5 g/d (0.31 N/tex) and the toughness is smaller than 10 $E^{\frac{1}{2}}$g/d (0.883 $NE^{\frac{1}{2}}$/tex), flying material easily occurs and good products such as yarns and fabrics cannot be obtained by spinning, weaving and knitting the sulfide fibers. When these products are used, the sulfide fibers abrade and drop out and the durability becomes poor. As a result, the practical performance is not sufficient.

When the acrylic sulfide fibers are used for abrasive materials, it is desirable that the sulfur content is higher than 3 weight %, preferably higher than 5 weight %. If the sulfur content is under 3 weight %, this is undesirable because the heat resistance of the fibers decreases and it is not expected that durability and abrasion resistance of the abrasive materials are remarkably improved.

When the acrylic sulfide fibers are used as reinforcing materials of hydraulic inorganic products, such as cement, cured in high temperature steam in an autoclave, it is necessary that the tensile strength is higher than 3.5 g/d (0.31 N/tex), preferably higher than 4.5 g/d (1.39 N/tex) and the sulfur content is higher than 0.5 weight % and lower than 20 weight %, preferably higher than 1 weight % and lower than 15 weight %.

If the sulfur content is lower than 0.5 weight %, alkali resistance of the reinforcing fibers decreases and tensile strength of the fibers decreases by steam-curing at higher temperature thereby losing the reinforcing effect towards hydraulic inorganic products. On the other hand, if the sulfur content is too high, tensile strength of the reinforcing fibers decreases.

Next, the method for preparing preferred acrylic sulfide fibers is described. As the acrylic fibers used for sulfuration, possibly highest strength/highest elastic modulus acrylic fibers, prepared by using a polymer of high degree of polymerization whose degree of polymerization expressed by intrinsic viscosity is at least 1.5, preferably 2.0 to 5.0 and whose tensile strength is at least higher than 7 g/d (0.62 N/tex), preferably higher than 9 g/d (0.79 N/tex), more preferably higher than 10 g/d (0.88 N/tex), should be used.

Until heating and sulfurizing the above described high strength acrylic fibers in a sulfur-containing atmosphere, sulfide fibers having high strength and excellent toughness cannot be obtained. When heated and oxidized in air, as in the former cases, oxidized fibers having high strength and excellent toughness cannot be obtained even if high strength acrylic fibers are used. For example, it is described in the specification of USP 3,508,874 that oxidized fibers whose tensile strength is 1.3 g/d (0.11 N/tex) are obtained by heating and oxidizing acrylic fibers whose tensile strength is 4.8 g/d (0.42 N/tex). As is described in the specification of USP 3,961,888, even if high strength acrylic fibers whose tensile strength is 8.08 g/d (0.71 N/tex) are heated in an oxygen atmosphere, oxidized fibers obtained are non-flammable but the tensile strength is only about 2.44 g/d (0.22 N/tex). No description of their values of elongation is found in either patent specification, but presumably the elongation is very small and the toughness is poor. As

EP 0 263 884 B1

described above, it is a well known fact that oxidized fibers having high strength and excellent toughness cannot be obtained by the conventional technology where acrylic fibers are heated and oxidized in air, even if high strength acrylic fibers are used. However, it has been found that sulfide fibers having high strength and excellent toughness can be obtained when high strength acrylic fibers are used for heating and sulfurizing acrylic fibers in a sulfur-containing atmosphere.

The acrylic fibers used for making preferred sulfide fibers comprise acrylonitrile (hereinaftrer abbreviated as AN) polymer, comprising AN homopolymer or a copolymer of AN of at least 95 mole % and a monomer copolymerizable with AN, of less than 5 mole %, for example carboxylic acids such as acrylic acid, methacrylic acid, itaconic acid and its lower alkyl ester derivatives; hydroxyalkyl acrylates or methacrylates having a hydroxyalkyl carboxyl group such as hydroxymethylacrylate, hydroxyethylacrylate, hydroxymethylmethacryate, acrylamide, methacrylamide, $\alpha$-chloroacrylonitrile, methacrylonitrile, hydroxyethylacrylic acid, acryl sulfonic acid and methacryl sulfonic acid.

These AN polymers are dissolved in an organic solvent such as dimethyl sulfoxide (DMSO), dimethyl acetamide (DMAC) or dimethyl formamide (DMF) or a concentrated aqueous solution of an inorganic salt such as calcium chloride, zinc chloride or sodium thiocyanate, or an inorganic solvent such as nitric acid, to prepare a spinning solution whose polymer concentration is 5 to 20 weight %, from which fibers whose is 0.5 to 7 denier (0.56 to 7.8 dtex), preferably 1 to 5 d (1.1 to 5.6 dtex) are prepared by means of a wet, dry or dry-wet spinning process, preferably a dry-wet spinning process. It is especially desirable that a DMSO solution of an AN polymer of high degree of polymerization whose intrinsic viscosity is higher than 2.5 is guided to a coagulation bath through holes of a spinning nozzle set at 1 to 20 mm above the liquid surface of the coagulation bath, preferably 3 to 10 mm, by means of a dry-wet spinning process and coagulated filaments thus obtained are then washed, desolvated, drawn for the first drawing step, dried and densified by means of a conventional process and are thereafter drawn by more than 1.1 times in a dry heating atmosphere at 150 to 270°C, preferably more than 1.5 times, to get the total drawing ratio of at least 10 times, preferably more than 12 times, and as a result, dense acrylic fibers of little inner/outer structural difference, having tensile strength of at least 10 g/d (0.883 N/tex), tensile modulus of higher than 180 g/d (15.9 N/tex), knot strength of higher than 2.2 g/d (0.19 N/tex) and X-ray crystalline orientation of higher than 93% are prepared.

Acrylic fibers thus obtained are heated and sulfurized in a sulfur-containing atmosphere, for example, carbon disulfide, hydrogen sulfide, sulfur dioxide or sulfur vapour or a mixture thereof. Sulfur dioxide is preferably used as it can introduce sulfur homogeneously into the fiber cross-sectional direction and fibers without a double layer structure can be thereby prepared with good reproducibility. It is preferable that the heating temperature is in the range 230 to 400°C.

When the above described acrylic fibers are heated in a sulfur dioxide atmosphere, the sulfuration reaction is relatively mild in comparison with the conventional oxidation reaction in an oxidizing atmosphere such as air, and sulfur dioxide smoothly diffuses into the fibers. As a result, sulfide fibers where sulfur atoms are homogeneously distributed in the whole fiber cross-sectional area and having a fiber structure without inner/outer structural difference can be prepared.

Moreover, in the above described sulfur containing atmosphere, especially sulfur dioxide atmosphere, a heating atmosphere mixed properly with another gas such as nitrogen or oxygen can be used. Especially, the mixed gas of sulfur dioxide with nitrogen is effective to efficiently react the fibers with sulfur dioxide. The heating in this sulfuration process can be done either at a constant temperature or under elevated temperature. For example, the first heating step can be done in a heating oven kept in a temperature range of 230 to 280°C and the second heating step in a temperature range of 280 to 400°C. The sulfuration can be done in a heating oven set at this stepwise temperature elevating condition. When acrylic fibers are heated and sulfurized, they can be heated under either relaxed, stretched or constant length condition, a tensile force as high as possible, for example, at least higher than 0.3 g/d (0.026 N/tex), is preferable to obtain sulfide fibers having high tensile strength. On the other hand, a relaxed condition is desirable to enlarge tensile elongation and to improve toughness.

The acrylic sulfide fibers thus obtained have high strength and remarkably excellent toughness, heat resistance, anti-flammability and alkali resistance and show the same spinnability as those of ordinary fibers for clothes. It is easy to make the fibers into yarns, fabrics and other fiber products and the fibers have good processability. They can be therefore widely used in such applications as asbestos substitute fibers as reinforcing materials of cement cured in an autoclave, abrasive materials, ground packings, gaskets, electric insulation papers, fire fighting clothes, and protective sheets against welding sparks and their industrial significance is therefore great.

Here, examples where composite materials consisting of cement cured in an autoclave and abrasive materials reinforced with acrylic sulfide fibers are described.

4

Firstly, in the case of reinforcement of cement cured in an autoclave, acrylic sulfide fibers used as reinforcing fibers are cut into lengths of 0.5 to 15 mm and the cut fibers are blended with a hydraulic inorganic substance such as cement. The amount of blending is 0.1 to 10 weight % against weight of the blended composition, preferably in a range of 0.5 to 5 weight % and a stable and sufficient reinforcing effect on the hydraulic inorganic substance can be obtained within this blending range.

As the hydraulic inorganic substance, inorganic substances having hydraulic properties such as calcareous and siliceous substances, for example, silica, diatomaceous earth, blast furnace slag, fly ash, lime, plaster and a variety of cements such as Portland cement can be used.

Of course, in order to give a porous property to the fiber-reinforced hydraulic inorganic products and to make them lightweight, perlite, siliceous micro-balloon and glass micro-balloon can be suitably mixed with them. Moreover, to improve the pulping property of a slurry described below and flow property of a paste, wood pulp, fibrile fibers prepared from acrylic fibers and aromatic polyamide fibers, inorganic fibers and other fillers can be added and blended.

Slurries or paste-like blended compounds where these reinforcing fibers of the present invention are blended with the above described hydraulic inorganic substances can be formed into desired shapes. For example, the so-called Hacheck method, where a slurry obtained is made into a desired shape, or a molding method where a blended compound of a paste of a hydraulic inorganic substance with the reinforcing fibers is poured into a mold to mold a desired shape, can be applied.

The molding thus obtained is usually put into an autoclave and cured with steam at 180°C, but there is no problem in applying either a temperature of above 180°C or a temperature in the range 110 to 180°C.

The time for steam curing depends on the curing temperature, but the range of 3 to 15 hours is preferable.

Next, when applied to abrasive materials, the acrylic sulfide fibers used for reinforcing fibers are cut into 1 to 10 mm lengths. The cut fibers are mixed with a matrix resin and other additives and the mixture is molded to prepare abrasive materials. As the reinforcing fibers, not only the above described cut fibers but also a variety of fabrics prepared from long fibers such as filaments and spun yarns can be used as base materials for the abrasive materials. Non-woven fabrics are prepared from long or short filaments and the non-woven fabrics can be used as the base materials for the abrasive materials.

As the matrix resins, no limitation exists, but resins having excellent heat resistance and abrasive characteristics such as phenolic resin, epoxy resin, polyimide resin, aromatic polyester resin or sulfur-containing heat resistant resin can be used.

As the additives, a variety of fibers having heat resistance such as aramide fiber, carbon fiber, steel fiber, glass fiber, phenolic fiber, polyimide fiber and asbestos are examples. To improve abrasive characteristics, a variety of inorganic and organic fillers such as graphite, silica powder, alumina powder, barium sulfate, metal powder, mica, clay, calcium carbonate, molybdenum disulfide, barite, cashew dust and rubber dust can also be blended.

As sulfide fibers contain sulfur, the adhesive property to the matrix resin is excellent and the amount of blending of the matrix resin can therefore be reduced. The matrix resin in the abrasive material has the role of an adhesive for fibers and fillers and as the amount of the matrix resin increases, heat resistance of the abrasive material usually decreases. Therefore, to be able to reduce the amount of the matrix resin is effective to improve heat resistance of the abrasive material. These abrasive materials are very useful for not only automotive disk pads, brake lining materials and clutches but also abrasive materials in general industrial applications.

Now, the effect of the present invention will be further described in detail in connection with the following examples, but it is not limited by these examples.

Meanwhile, the values of intrinsic viscosity of polymers, tensile strength and elongation, heat resistance, limiting oxygen index and alkali resistance of fibers are measured by the following methods of measurement.

Intrinsic viscosity: 75 mg of dried AN polymer are put in a flask and 25 ml of DMF containing 0.1 N sodium thiocyanate are added to completely dissolve the AN polymer. The relative viscosity of the polymer solution thus obtained is measured at 20°C by using an Ostwald's viscometer. The intrinsic viscosity is calculated by the following equation.

Intrinsic viscosity =
$((1 + 1.32 \times (\text{relative viscosity})^{1/2} - 1)/0.198$

Tensile strength and elongation: They are measured by the measuring method defined in JIS-L-1069.

Heat resistance: Heat resistance is expressed by tenacity retention rate (%) after heating the sample fibers under relaxed condition at 180°C in air for 10 days.

Limiting oxygen index (LOI): This value is measured by the measuring method defined in JIS-K-7201 and the method is described more concretely as follows.

About 1 g of the sample to be measured is wound on a wire (a supporting body), whose diameter is about 1 mm, to make a cord-like material whose diameter is about 4 mm, which is set on a frame whose length is 150 mm. This is then set in a burning cylinder, through which a gas mixture of oxygen and nitrogen is passed at a slow rate of 11.4 ℓ/min for about 30 seconds and the upper edge of the sample is then ignited and the minimum amount of oxygen flow (A) and the amount of nitrogen flow (B) simultaneously necessary for continuous burning of the sample for more than 3 minutes or for continuous burning of the sample to a burned length of more than 50 mm are determined. The ratio of oxygen flow to the total amount of the mixed gas flow is LOI, which can be expressed by the following equation.

$$LOI = ( A/(A+B) ) \times 100$$

Alkali resistance: The sample fibers are immersed in the upper transparent part of a cement 5 weight % aqueous solution under relaxed state and the tensile tenacity is measured after 6 hours immersion. Tenacity retention rate (%) is calculated by using the tensile tenacity of the fibers before and after treating in the above described cement solution and alkali resistance is expressed by this value.

In the following, Examples 1 to 6 and comparative Examples 1 to 5 are given only as reference, since they relate to the preferred acrylic fibers (Examples) contrasted with oxidized fibers obtained by heating in air (comparative Examples). By contrast, Examples 7 to 15, with the corresponding comparative Examples, illustrate the composite materials of the invention.

Examples 1 to 6 and comparative Examples 1 to 5 [Reference]

99.7 mole % of AN and 0.3 mole % of itaconic acid were solution polymerized in DMSO and AN polymers having various intrinsic viscosities shown in Table 1 were thereby prepared. Wet spinning and dry-wet spinning were carried out by using the polymer solutions thus obtained as the spinning solution. In all cases, DMSO 55 % aqueous solution was used as the coagulation bath. In the case of the dry-wet spinning, the distance between the spinning nozzle and the liquid surface of the coagulation bath was set at 5 mm and the distance from the liquid surface of the coagulation bath to the fiber gathering guide was set at 400 mm.

Undrawn filaments obtained were drawn by 5 times in hot water, washed with water and secondly drawn, after imparting oil, by 90 % of the maximum draw ratio in a dry heating tube at 180 to 200°C to obtain acrylic fibers shown in Table 1.

Table 1

| Type of acrylic fiber | Intrinsic viscosity of polymer | Spinning process | Fiber properties | | | |
|---|---|---|---|---|---|---|
| | | | Denier d (dtex) | Tensile strength g/d (n/tex) | Tensile elongation (%) | Tensile modulus g/d (N/tex) |
| A | 1.2 | Wet | 1.5(1.67) | 4.7(0.415) | 10.9 | 72 (6.36) |
| B | 1.7 | Wet | 1.0(1.1) | 7.1(0.63) | 12.2 | 133 (11.74) |
| C | 1.7 | Dry-wet | 0.8(0.89) | 11.5(1.02) | 15.2 | 178 (15.7) |
| D | 3.1 | Dry-wet | 1.2(1.3) | 13.3(1.17) | 12.3 | 200 (17.7) |

Acrylic fibers shown in Table 1 were then sulfurized or oxidized in sulfur dioxide ($SO_2$) or air respectively under various reaction conditions. Tensile strength, toughness, heat resistance and antiflammability (LOI) of the sulfide or oxidized fibers obtained were measured. Crimp was given to these fibers and the crimped fibers were cut into 120 mm lengths and the spinnabilities of the cut crimped fibers were evaluated by using a model spinning machine. These results are shown in Table 2.

Table 2 shows that the higher the strengths of acrylic fibers before sulfuration, the higher the strength and toughness of the acrylic sulfide fibers. On the other hand, in the case of the oxidized fibers obtained by heating in air, fibers having low tensile strength and poor toughness were only obtained if the strengths of acrylic fibers before oxidation were high.

Moreover, as the sulfur content by sulfuration increases, heat resistance and anti-flammability of sulfide fibers obtained are improved. When fibers of low toughness were used, the spinnability was poor and spun yarns of good quality could not be obtained.

Table 2

| Example(E) or comparative example(C) | Type of acrylic fiber | Reaction condition | | | Fiber property | | | | | Spinnability of fibers |
|---|---|---|---|---|---|---|---|---|---|---|
| | | Type of gas | Temperature x Time (°C)x(hr) | State of tension $g/d$ (N/tex) | Sulfur content (weight%) | Tensile strength $g/d$ (N/tex) | Toughness $(g/d)\times(E)^{1/2}$ (N/tex × $E^{1/2}$) | Heat resistance (%) | LOI | |
| E 1 | B | $SO_2$ | 280x2 | Constant length | 11 | 5.2 (0.46) | 14 (1.24) | 33 | 45 | Good |
| E 2 | C | $SO_2$ | 280x2 | Constant length | 11 | 6.5 (0.57) | 20 (1.76) | 31 | 47 | Good |
| E 3 | D | $SO_2$ | 280x2 | Constant length | 12 | 7.3 (0.64) | 24 (2.11) | 35 | 46 | Good |
| C 1 | A | $SO_2$ | 280x2 | Constant length | 12 | 4.0 (0.35) | 8 (0.71) | 38 | 44 | Poor |
| C 2 | A | Air | 250x1.5 | Constant length | 0 | 1.9 (0.16) | 5 (0.44) | 12 | 48 | Poor |
| C 3 | D | Air | 250x1.5 | Constant length | 0 | 2.7 (0.24) | 8 (0.71) | 13 | 51 | Poor |
| E 4 | C | $SO_2$ | 370x0.5 | 0.3 (0.026) | 22 | 4.1 (0.36) | 11 (0.97) | 51 | 70 | Good |
| E 5 | D | $SO_2$ | 340x0.5 | Relaxed | 20 | 4.2 (0.37) | 16 (1.41) | 80 | 70 | Good |
| E 6 | C | $SO_2$ | 280x1 | 0.3 (0.026) | 6 | 6.6 (0.58) | 25 (2.21) | 22 | 70 | Good |
| C 4 | B | $SO_2$ | 310x1 | Relaxed | 19 | 3.3 (0.29) | 9 (0.79) | 55 | 27 | Poor |
| C 5 | A | $SO_2$ | 295x1.5 | Constant length | 19 | 3.9 (0.34) | 7 (0.62) | 70 | 70 | Poor |

Examples 7 to 14 and comparative Examples 6 to 7 [Invention]

Acrylic fibers B, C and D were sulfurized or oxidized under reaction conditions shown in Table 3. The fibers having properties shown in Table 3 were thereby obtained.

The fibers thus obtained were cut into 5 mm lengths and a compound comprizing 10 g of the cut fibers shown in Table 3, 10 g of wood pulp, 10 g of $Ca(OH)_2$, 10 g of $Al_2(SO_4)_3$ and 10 liters of water was prepared. After stirring, 460 g of Portland cement were added and the mixture was stirred again. 200 ppm of anionic polyacrylamide polymer coagulating agent were then added under low speed stirring to prepare a cement slurry, which was then transferred to a mold where a wirenet of 50 mesh was placed. The slurry was filtered through the wirenet and pressed under a pressure of 100 kg/cm$^2$ (9.8 MPa) for one minute, to mold a green sheet of about 6 mm in thickness. After curing this green sheet in water at 70ºC for 15 hours, it was transferred to an autoclave, where it was steam-cured at 180ºC for 5 hours to obtain a cement plate whose density was 1.6. Test pieces were cut out from this cement plate and the bending strengths under wet state were measured. The results obtained are shown in Table 3.

Table 3

| Example(E) or comparative example(C) | Type of acrylic fiber | Reaction condition | | | | Fiber property | | | Property of cement plate |
|---|---|---|---|---|---|---|---|---|---|
| | | Type of gas | Temperature x Time (°C)x(hr) | State of tension ?g/d? (N/tex) | Sulfur content (weight%) | Tensile strength ?g/d? (N/tex) | Toughness $(g/d) \times (E)^{1/2}$ (N/tex x $E^{1/2}$) | Alkali resistance (%) | Bending strength ?kg/cm²? (MPa) |
| E 7 | C | SO₂ | 250x0.5 | 0.3 (0.026) | 1 | 10.0 (0.88) | 35 (3.09) | 52 | 160 (15.7) |
| E 8 | C | SO₂ | 260x1 | 0.3 (0.026) | 3 | 9.0 (0.79) | 31 (2.73) | 75 | 175 (17.2) |
| E 9 | C | SO₂ | 280x1 | 0.3 (0.026) | 5 | 8.0 (0.71) | 26 (2.30) | 86 | 182 (17.9) |
| E10 | C | SO₂ | 295x1 | 0.3 (0.026) | 16 | 5.5 (0.49) | 16 (1.41) | 75 | 155 (15.2) |
| E11 | C | SO₂ | 340x1 | 0.3 (0.026) | 20 | 4.6 (0.41) | 12 (1.06) | 53 | 150 (14.7) |
| C 6 | C | Air | 250x2 | 0.3 (0.026) | 0 | 2.6 (0.23) | 8 (0.71) | 0 | 130 (12.8) |
| C 7 | C | Unreacted | | | 0 | 11.5 (1.02) | 45 (3.97) | 0 | 137 (13.4) |
| E12 | B | SO₂ | 280x2 | Constant length | 11 | 5.2 (0.46) | 14 (1.24) | 80 | 162 (15.9) |
| E13 | C | SO₂ | 280x2 | Constant length | 11 | 6.5 (0.57) | 20 (1.77) | 85 | 170 (16.7) |
| E14 | D | SO₂ | 280x2 | Constant length | 12 | 7.3 (0.64) | 24 (2.12) | 95 | 185 (18.1) |

It is found that acrylic sulfide fibers not only have superior tensile strength and alkali resistance to those of the oxidized fibers obtained by heating and oxidizing in air, but also clearly have an excellent reinforcing effect on the cement plate obtained by curing in an autoclave.

Especially when acrylic fibers obtained from AN polymers of high degree of polymerization were used, sulfide fibers obtained had high tensile strength and alkali resistance and the reinforcing effect on cement was remarkably improved.

Example 15 and comparative Examples 8 to 10 [Invention]

Acrylic fibers D were sulfurized or oxidized under the reaction conditions shown in Table 4 to obtain fibers having properties shown in Table 4.

These fibers were cut into about 1 mn lengths and the fibers, a phenolic resin and $CaCO_3$ filler were mixed in a volume ratio of 57:25:18. The blend was put in a mold and hot-pressed under the condition of 180°Cand 200kg/cm$^2$ (19.6 MPa). The surface of the molding obtained was ground, polished with No. 600 sandpaper with water, washed with water and dried to prepare an abrasive material. The abrasive coefficient and the amount of abrasion of the plate-shaped abrasive material obtained were measured by means of the Suzuki-type abrasion tester under loading of 10 kg/cm$^2$ (0.98 MPa), circular speed of 100 m/min and a temperature of 250 and 350°C. The relative values of these measurements, when the amount of abrasion for the present material, that is, asbestos, was set at 100, are shown in Table 4.

As a result of high strength and excellent heat resistance of the reinforcing fibers, the abrasive materials where the sulfide fibers were used as the reinforcing materials showed a lower amount of abrasion and were superior in comparison with the abrasive material using asbestos or conventional oxidized fibers.

Table 4

| Example (E) of comparison Example (C) | Type of acrylic fiber | Reaction condition | | | Fiber property | | | | | Characteristics of abrasive material | | |
|---|---|---|---|---|---|---|---|---|---|---|---|---|
| | | Type of gas | Temperature x Time (°C)x(hr) | State of tension g/d (N/tex) | Sulfur Content (Weight%) | Tensile strength g/d (N/tex) | Toughness (g/d)x(E)^1/2 (N/tex x E^{1/2}) | Heat resistance | Temperature (°C) | Abrasive coefficient | Amount of abrasion (Relative value) | State of abrasion |
| E15 | D | $SO_2$ | 300x0.7 | 0.3 (0.026) | 15 | 5.4 (0.48) | 15 (1.32) | 61 | 250 / 350 | 0.27 / 0.29 | 20 / 21 | |
| C 8 | D | unreacted | | | 0 | 13.3 (1.17) | 47 (4.14) | 9 | 250 / 350 | – / – | – / – | Could not be measured as melting due to heating occurred |
| C 9 | D | Air | 250x2 | 0.3 (0.026) | 0 | 2.6 (0.23) | 8 (0.71) | 13 | 250 / 350 | 0.27 / 0.33 | 39 / 53 | Cracks occurred Large sound of abrasion |
| C10 | Asbestos | | – | – | – | – | – | – | 250 / 350 | 0.40 / 0.44 | 100 / 100 | |

## Claims

1. Composite materials reinforced with acrylic sulfide fibers.

**2.** Composite materials according to Claim 1, wherein the acrylic sulfide fibers have a tensile strength of at least 3.5 g/d (0.31 N/tex), a toughness, expressed by $TE^{\frac{1}{2}}$, i.e. by the product of the tensile strength and the square root of tensile elongation (E%), greater than 10 when T is in g/d (0.883 when T is in N/tex), and a sulfur content of more than 0.5 weight %.

**3.** Composite materials according to Claim 1 or Claim 2, wherein the sulfur content of the acrylic sulfide fibers is between 0.5 and 25 weight %.

**4.** Composite materials according to any preceding claim, wherein the acrylic sulfide fibers are produced by heating acrylic fibers whose tensile strength is at least higher than 7 g/d (0.618 N/tex) in a sulfur-containing atmosphere.

**5.** Composite materials according to Claim 4, wherein the acrylic fibers are obtained by dry-wet spinning of acrylic fibers.

**6.** Composite materials according to Claim 4, wherein the acrylic fibers are obtained by dry-wet spinning an acrylonitrile polymer whose intrinsic viscosity is at least 2.5 and are acrylic fibers whose tensile strength is greater than 10 g/d (0.883 N/tex), tensile modulus is greater than 180 g/d (15.9 N/tex), knot strength is greater thn 2.2 g/d (0.19 N/tex) and the degree of crystalline orientation measured by X-ray is greater than 93%.

**7.** Composite materials according to any of claims 4 to 6, wherein said sulfur-containing atmosphere is a mixed atmosphere of sulfur dioxide and nitrogen.

**8.** Composite materials according to Claim 1, wherein said composite materials are hydraulic substances cured under a wet and heated state.

**9.** Composite materials according to any preceding claim, wherein the acrylic sulfide fibers have a sulfur content which is not greater than 20 weight %.

**10.** Composite materials according to any of Claims 1 to 7, wherein said composite materials are abrasive materials.

**11.** Composite materials according to Claim 10, wherein the sulfur content of the acrylic sulfide fibers is more than 3 weight %.

**Patentansprüche**

**1.** Verbundmaterialien, die mit Acrylsulfidfasern verstärkt sind.

**2.** Verbundmaterialien nach Anspruch 1, in denen die Acrylsulfidfasern eine Zugfestigkeit von mindestens 3,5 g/d (0,31 N/tex), eine Zähigkeit, ausgedrückt durch $TE^{1/2}$, d.h. durch das Produkt aus der Zugfestigkeit und der Quadratwurzel der Zugdehnung (E %), von größer als 10, wenn T in g/d angegeben ist (0,883, wenn T in N/tex angegeben ist), und einen Schwefelgehalt von mehr als 0,5 Gew.-% aufweisen.

**3.** Verbundmaterialien nach Anspruch 1 oder 2, worin der Schwefelgehalt der Acrylsulfidfasern zwischen 0,5 und 25 Gew.-% liegt.

**4.** Verbundmaterialien nach einem der vorhergehenden Ansprüche, worin die Acrylsulfidfasern hergestellt wurden durch Erhitzen von Acrylfasern, deren Zugfestigkeit mindestens höher ist als 7 g/d (0,681 N/tex) in einer Schwefel enthaltenden Atmosphäre.

**5.** Verbundmaterialien nach Anspruch 4, worin die Acrylfasern durch Trocken-Naß-Spinnen von Acrylfasern erhalten wurden.

**6.** Verbundmaterialien nach Anspruch 4, worin die Acrylfasern erhalten wurden durch Trocken-Naß-Spinnen eines Acrylnitril-Polymers, dessen Intrinsic-Viskosität mindestens 2,5 beträgt und bei denen es sich handelt um Acrylfasern, deren Zugfestigkeit *größer* ist als 10 g/d (0,883 N/tex), deren Zugmodul *größer* ist als 180 g/d (15,9 N/tex), deren Knotenfestigkeit *größer* ist als 2,2 g/d (0,19 N/tex) und deren Kristallorientierungsgrad, gemessen durch Röntgenstrahlung, mehr als 93 % beträgt.

7. Verbundmaterialien nach einem der Ansprüche 4 bis 6, worin die Schwefel enthaltende Atmosphäre eine gemischte Atmosphäre aus Schwefeldioxid und Stickstoff ist.

8. Verbundmaterialien nach Anspruch 1, worin die Verbundmaterialien hydraulische Substanzen sind, die in einem nassen und erhitzten Zustand gehärtet wurden.

9. Verbundmaterialien nach einem der vorhergehenden Ansprüche, worin die Acrylsulfidfasern einen Schwefelgehalt aufweisen, der nicht mehr als 20 Gew.-% beträgt.

10. Verbundmaterialien nach einem der Ansprüche 1 bis 7, worin die Verbundmaterialien Abriebsmaterialien (Schleifmaterialien) sind.

11. Verbundmaterialien nach Anspruch 10, worin der Schwefelgehalt der Acrylsulfidfasern mehr als 3 Gew.-% beträgt.

## Revendications

1. Matériaux composites renforcés par des fibres acryliques sulfurées.

2. Matériaux composites selon la revendication 1, dans lesquels les fibres acryliques sulfurées ont une résistance à la traction d'au moins 3,5 g/d (0,31 N/tex), une ténacité exprimée par $T.E^{1/2}$, c'est-à-dire par le produit de la résistance à la traction par la racine carrée de l'allongement à la rupture en contrainte de traction (E %) supérieure à 10, T étant exprimé en g/d (0,883 quand T est exprimé en N/tex), et une teneur en soufre supérieure à 0,5 % en poids.

3. Matériaux composites selon la revendication 1 ou 2, dans lesquels la teneur des fibres acryliques sulfurées en soufre est comprise entre 0,5 et 25 % en poids.

4. Matériaux composites selon l'une quelconque des revendications précédentes, dans lesquels les fibres acryliques sulfurées sont obtenues par chauffage, dans une atmosphère contenant du soufre, de fibres acryliques dont la résistance à la traction est au moins supérieure à 7 g/d (0,618 N/tex).

5. Matériaux composites selon la revendication 4, dans lesquels les fibres acryliques sont obtenues par filage mixte humidesec de fibres acryliques.

6. Matériaux composites selon la revendication 4, dans lesquels les fibres acryliques sont obtenues par filage mixte humide-sec d'un polymère de l'acrylonitrile dont la viscosité intrinsèque est d'au moins 2,5, et qui sont des fibres acryliques dont la résistance à la traction est supérieure à 10 g/d (0,883 N/tex), le module d'élasticité en traction est supérieur à 180 g/d (15,9 N/tex), la résistance au noeud est supérieure à 2,2 g/d (0,19 N/tex) et le degré d'orientation cristalline, mesuré aux rayons X, est supérieur à 93 %.

7. Matériaux composites selon l'une quelconque des revendications 4 à 6, dans lesquels ladite atmosphère contenant du soufre est une atmosphère mixte de dioxyde de soufre et d'azote.

8. Matériaux composites selon la revendication 1, dans lesquels lesdits matériaux composites sont des substances hydrauliques durcies à l'état sec et à l'état humide.

9. Matériaux composites selon l'une quelconque des revendications précédentes, dans lesquels les fibres acryliques sulfurées ont une teneur en soufre non supérieure à 20 % en poids.

10. Matériaux composites selon l'une quelconque des revendications 1 à 7, dans lesquels lesdits matériaux composites sont des matériaux abrasifs.

**11.** Matériaux composites selon la revendication 10, dans lesquels la teneur des fibres acryliques sulfurées en soufre est supérieure à 3 % en poids.